# EUROPÄISCHE PATENTSCHRIFT

(11) **EP 1 184 641 B1**
(45) Veröffentlichungstag und Bekanntmachung des Hinweises auf die Patenterteilung: **04.02.2009**
(21) Anmeldenummer: 01119934.6
(22) Anmeldetag: 17.08.2001
(51) Int. Cl.: G01B 21/26, G01B 5/255, G01B 7/315, G01B 11/275, G01G 19/02

(54) **Verfahren und Einrichtung zur Fahrwerkvermessung**
Method and apparatus for measuring the alignment of a vehicle frame
Procédé et appareil pour mesurer l'équilibrage et l'alignement d'un châssis

(30) Priorität: 02.09.2000 DE 10043359
(43) Veröffentlichungstag der Anmeldung: 06.03.2002
(73) Patentinhaber: Beissbarth GmbH, 80993 München (DE)
(72) Erfinder: Schommer, Stefan, 85716 Unterschleissheim (DE); Dry, Craig, 85283 Wolnzach (DE)
(74) Vertreter: Klunker . Schmitt-Nilson . Hirsch

(56) Entgegenhaltungen:
- EP-A- 0 803 722
- EP-A- 0 977 010
- DE-A- 2 838 399
- US-A- 5 886 350
- US-A- 5 937 365

## Beschreibung

Die Erfindung betrifft ein Verfahren zur Fahrwerkvermessung und eine Fahrwerkvermessungseinrichtung mit Meßköpfen zur Bestimmung der Radstellungen der Räder eines Kraftfahrzeuges auf einem Meßplatz, wobei aus den Radstellungen der Räder durch die Fahrwerkvermessungseinrichtung die fahrwerkspezifischen Daten wie geometrische Fahrachse Sturz, Spur- und Radversatz bestimmt werden.

Bei der Fahrwerkvermessung spielt die räumliche Lage des Fahrzeugchassis in Bezug auf die horizontale Ebene eines Meßplatzes eine Rolle, weil die Radstellung der Räder durch eine Schrägstellung des Chassis beeinflußt werden. Die Fahrzeughersteller geben daher Anweisungen, wie das Fahrzeug zu beladen ist, beispielsweise halbgefüllter Tank und dergleichen, damit das Fahrzeug eine definierte Lage, im wesentlichen in einer horizontalen Ebene, bezüglich des Meßplatzes einnimmt. Um die ordnungsgemäße Lage des Fahrzeugs gegenüber dem Meßplatz festzustellen, hat man bisher zur Korrekturrechnung über Kennlinientabellen beispielsweise den Abstand definierter Punkte des Chassis zum Boden des Meßplatzes an den vier Rädern gemessen, um gegebenenfalls eine Schräglage des Chassis zu ermitteln. Es wird dann versucht, die Schräglage des Fahrzeuges durch Umverteilung der Gewichte in dem Fahrzeug auszugleichen. Dies ist umständlich und zeitraubend, und die Fälle, bei denen in dem Fahrzeug zusätzliche Massen so angeordnet sind, daß sie keine Schräglage verursachen, nicht erfaßt.

Aus der EP-A-0977010, der EP-A-0803722 und der DE 28 38 399 A ist bereits ein Verfahren bekannt, welches den Oberbegriff des Patentanspruches 1 entspricht. Bei diesem bekannten Verfahren werden die Radaufstandskräfte gemessen. Es ist jedoch nicht möglich, durch die pure Messung der Radaufstandskräfte eine Schräglage des Chassis bzw. eine Überladung zu ermitteln.

Aufgabe der vorliegenden Erfindung ist es, ein Verfahren nach dem Stand der Technik bereizustellen, bei dem eine evtl. Schräglage des Chassis bestimmt werden kann. Diese Aufgabe wird durch die kennzeichnenden Merkmale des Patentanspruchs 1 gelöst.

Bevorzugte Ausführungsbeispiele des Verfahrens werden durch die abhängigen Ansprüche 2 bis 5 dargestellt.

Durch den genannten Stand der Technik ist ebenfalls eine Fährwerkvermessungseinrichtung nach dem Oberbegriff des Patentanspruchs 6 bekannt. Bei einer solchen bekannten Fahrwerkvermessungseinrichtung kann durch die bloße Messung der Radaufstandskraft bzw. Meßbarkeit der Radaufstandskraft noch nicht auf eine Schräglage des Chassis geschlossen werden.

Es ist eine weitere Aufgabe der Erfindung, eine Fahrwerkvermessungseinrichtung nach dem Stand der Technik bereitzustellen, durch welche eine Schräglage des Chassis bestimmt werden kann. Diese Aufgabe wird durch die kennzeichnenden Merkmale des Patentanspruchs 6 bestimmt.

Besonders bevorzugte Ausführungsbeispiele der Fahrwerkvermessungseinrichtung nach Patentanspruch 6 werden durch die abhängigen Ansprüche 7 bis 12 dargestellt.

Ausführungsbeispiele der Erfindung werden nun anhand der beiliegenden Zeichnungen beschrieben.

Es zeigen:
- Fig. 1: eine schematische Draufsicht auf eine Hebebühne;
- Fig. 2: eine perspektivische Draufsicht auf eine Drehplatte;
- Fig. 3: eine schematische Draufsicht auf eine Schiebeplatte;
- Fig. 4: eine schematische Darstellung des inneren Aufbaus einer Drehplatte;
- Fig. 5: eine schematische Darstellung der Verbindung der Wiegeeinheiten mit einem Mikroprozessor und dem zentralen Rechner einer Fahrwerkvermessungseinrichtung.

InFig. 1 ist schematisch eine Hebebühne in Draufsicht dargestellt, die vier Säulen, 2, 4, 6, 8 aufweist, an denen zwei Querträger 10, 12 auf und ab verfahrbar angeordnet sind, auf denen zwei Fahrschienen 14, 16 liegen. Auf den Fahrschienen 14, 16 sind zwei Drehplatten 18, 20 und zwei Schiebeplatten 22, 24 dargestellt. Schließlich sind zwei Rampen 26, 28 vorgesehen, über die ein Fahrzeug auf die Fahrschienen 14, 16 fahren kann.

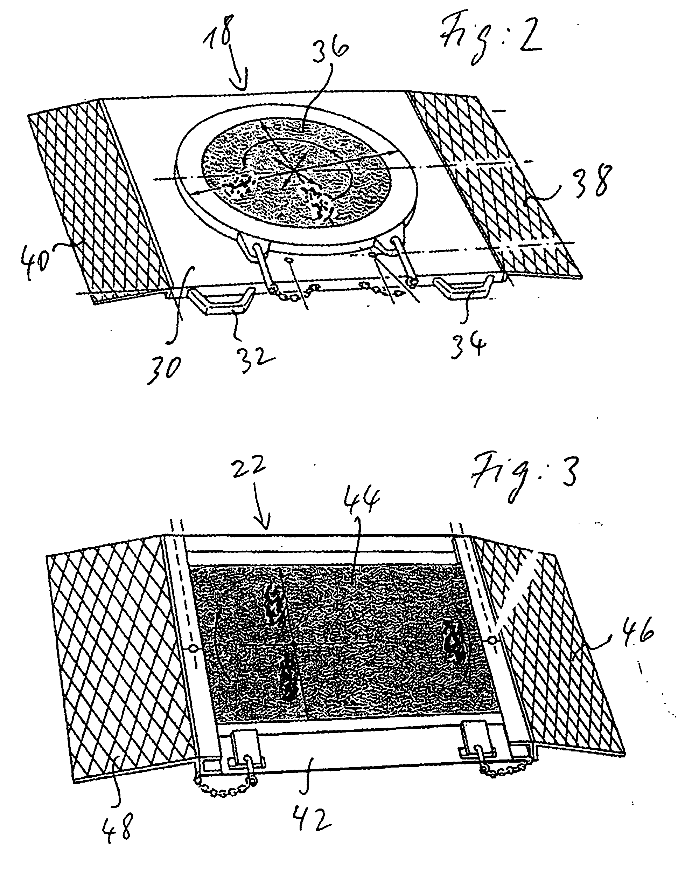

Ein Beispiel für eine Drehplatte 18 ist in Figur 2 perspektivisch dargestellt. Die Drehplatte besteht aus einem etwas rechteckigen Gehäuse 30 mit Griffen 32, 34 für deren Handhabung, einem Drehteller 36 und zwei Auffahrrampen 38, 40. Der Drehteller 36 ist in einem Gehäuse 37 untergebracht, welches an dem Grundgehäuse festgelegt ist. Die Drehplatte 18 ist eine Baueinheit, die auf die Fahrschienen 14, 16 einer Hebebühne aufgelegt und je nach dem Radstand des zu vermessenden Fahrzeuges auf der entsprechenden Fahrschiene positioniert wird.

Fig. 3 zeigt eine Schiebeplatte 22, die eine Halterung 42 für eine seitlich darin verschiebbar gelagerte Spurplatte 44 und zwei Auffahrrampen 46, 48 aufweist. Auch die Schiebeplatte 22 ist eine Baueinheit, die auf die Fahrschienen 14, 16 einer Hebebühne aufgelegt und je nach dem Radstand des zu vermessenden Fahrzeuges auf der entsprechenden Fahrschiene 14, 16 positioniert wird.

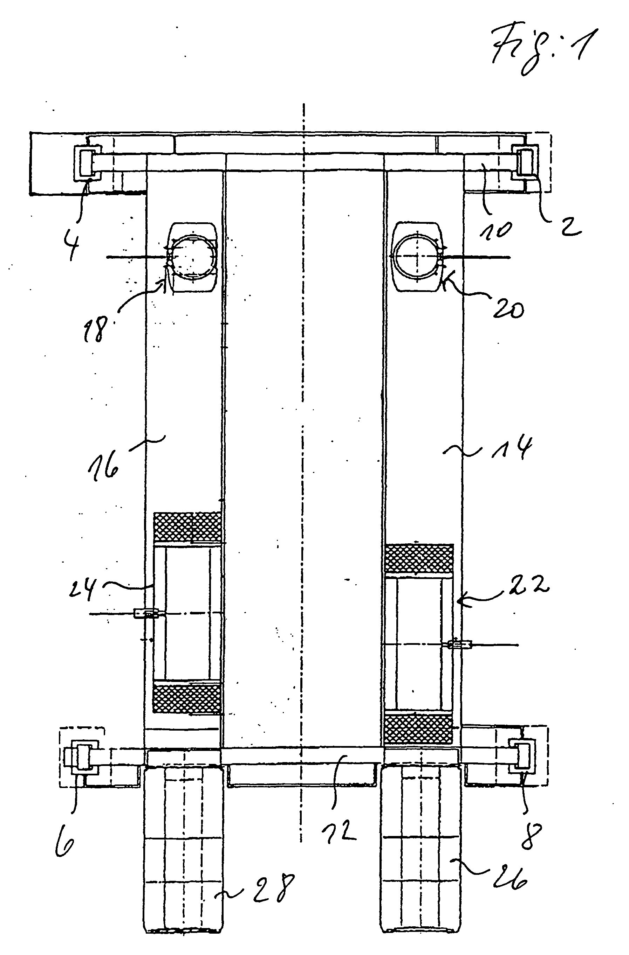

Obwohl in Figur 1 zwei Schiebeplatten 22 und zwei Drehplatten 18 gezeigt sind, kann die Hebebühne auch mit vier Drehplatten für die vier Räder des Fahrzeuges ausgestattet sein, was in dem Belieben des Benutzers liegt. Eine derartige Hebebühne mit Schiebeplatten und/oder Drehplatten wird zur Fahrwerkvermessung und Fahrwerkjustage benutzt, wobei sowohl die Vermessung als auch die Justage durchgeführt werden können, während das Fahrzeug sich auf der Hebebühne befindet. Bei der Fahrwerkvermessung wird mit einer Fahrwerkvermessungseinrichtung, einem sogenannten Achsmeßgerät, mit Meßköpfen zur Bestimmung der Radstellung der Räder des Fahrzeuges gemessen. Aus den Radstellungen der Räder werden die fahrwerkspezifischen Daten wie geometrische Fahrachse, Sturz, Spur und Radversatz bestimmt.

Bei der Fahrwerkvermessungeinrichtung gemäß der Erfindung werden die Radaufstandskräfte der Räder des Fahrzeuges auf den Schiebe- und/oder Drehplatten gemessen und in die Fahrwerkvermessung mit einbezogen. Bei der erfindungsgemäßen Fahrwerkvermessungseinrichtung ist mit anderen Worten eine Wiegeeinrichtung zur Messung der Radaufstandskräfte des Fahrzeuges vorgesehen, wobei die Wiegeeinrichtung in das Fahrwerkmeßsystem integriert ist.

Dazu sind Wiegeeinheiten in den Schiebe- und/oder Drehplatten angeordnet. Damit sind die Wiegeeinheiten in einer Hebebühne oder in dem Arbeitsplatz an dem für die Dreh- und Schiebeplatte vorgesehenen Bereich angeordnet. Die Wiegeeinheiten können jedoch auch in der Hebebühne oder in dem Arbeitsplatz außerhalb der für die Dreh- und Schiebeplatte vorgesehenen Bereich angeordnet sein. Dazu sind dann die Wiegeeinheiten in Gehäusen untergebracht, die separat von den Dreh- und Schiebeplatten ausgeführt sind.

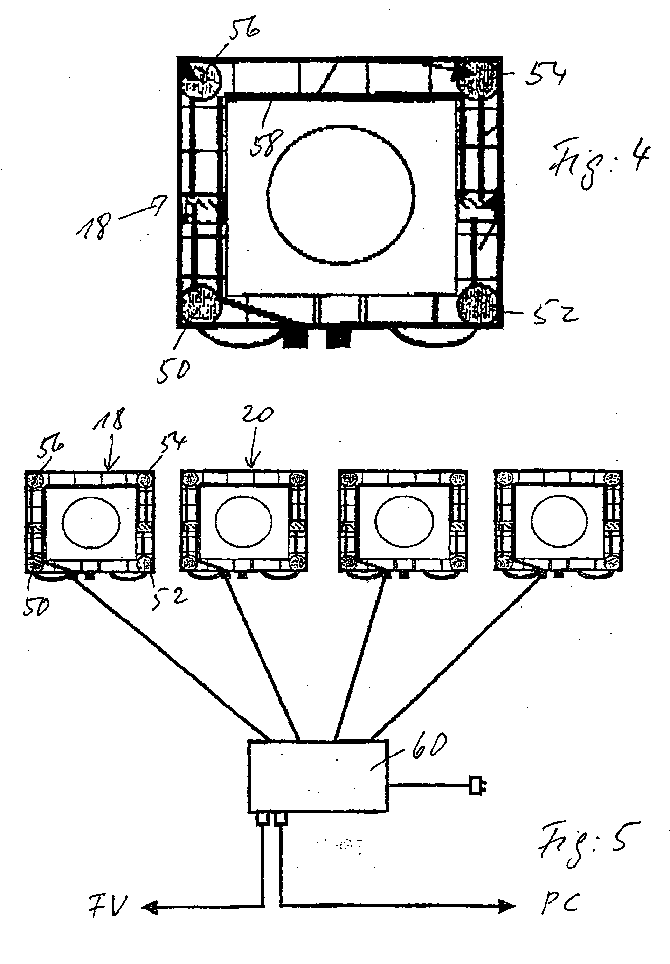

Eine Wiegeeinheit, die nach dem bevorzugten Ausführungsbeispiel der Erfindung in einer Drehplatte 18 untergebracht ist, ist in Fig. 4 gezeigt. Die Wiegeeinheit umfaßt vier Sensoren 50, 52, 54, 56, die an den Ecken der Drehplatte 18 angeordnet sind. Elektrisch sind die Sensoren 50 bis 56 über eine Ringleitung 58 miteinander verbunden. Mit den Übrigen weisen die Sensoren Gelenkteller auf, über die die Kraft auf die Sensoren 50, 52, 54, 56 eingeleitet wird, wobei gewisse Querkräfte und Verspannungen aufgenommen werden können. Die Sensoren sind typischerweise auf Radlasten bis zu 1500 kg ausgelegt.

Schaltungstechnisch sind je zwei Sensoren an einem eigenen Verstärker zusammengefaßt, und die Ausgangssignale des Verstärkers werden an eine Kontrolleinheit 60 mit Mikroprozessor gegeben, von der die Sensoren mit Spannung versorgt und die Signale ausgewertet werden. Die Kontrolleinheit verfügt über eine Schnittstelle, über die die Meßwerte an einen PC oder den zentralen Rechner der Fahrwerkvermessungseinrichtung FV übertragen werden können. Dort werden die Meßwerte dann weiter verarbeitet und in die Fahrwerkvermessung mit einbezogen. Von dem PC oder Zentralrechner wird dann auch die Kalibrierung der Sensoren durchgeführt, und die benötigten Meßwerte werden abgerufen. Eine derartige Schaltung ist in Fig. 4 dargestellt. Es ist jedoch zu beachten, daß die Wiegeeinrichtung mit der Fahrwerkvermessungeinrichtung nicht nur durch Kabel sondern auch durch Infrarotkupplung oder Funk gekoppelt sein können.

In dem PC oder dem Rechner der Fahrwerkvermessungseinrichtung werden somit die gewünschten Meßgrößen wie Radlast, Achslast, Gesamtgewicht, Radlast- und Achslastverteilung berechnet, um den Beladungszustand des Fahrzeuges zu ermitteln. Der Beladungszustand wird dann mit den Herstellerangaben verglichen, und gegebenenfalls wird eine Fehlermeldung erzeugt.

In einer weiteren Ausgestaltung des Verfahrens werden Kennlinientabellen in Abhängigkeit von Fahrzeugtyp erstellt, die eine Beziehung zwischen den Gewichtsmesswerten und den Radstellungsdaten herstellen, so daß die gemessenen Radstellungsdaten über eine Korrekturrechnung unter Verwendung der Kennlinientabellen in solche korrigierten Radstellungsdaten umgerechnet werden können, die eine Schräglage des Fahrzeuges bei der Vermessung berücksichtigen.

Es ist zu beachten, dass die erfindungsgemäße Fahrwerkvermessungseinrichtung nicht auf die gezeigten Beispiele beschränkt ist. So können die Dreh- und Schiebeplatten der Fahrwerkvermessungseinrichtung und damit die Wiegeeinrichtungen nicht nur auf einer Hebebühne sondern auch an einem groben Arbeitsplatz für die Fahrwerkvermessung und Justage eingesetzt werden.

## Patentansprüche

1. Verfahren zur Fahrwerkvermessung mit einer Fahrwerkvermessungseinrichtung mit Meßköpfen zur Bestimmung der Radstellungen der Räder eines Kraftfahrzeuges auf einem Meßplatz, wobei aus den Radstellungen der Räder durch die Fahrwerkvermessungseinrichtung die fahrwerksspezifischen Daten, wie geometrische Fahrachse, Sturz, Spur und Radversatz, bestimmt werden, wobei im Rahmen der Fahrwerkvermessung die Radaufstandskraft der Räder des Fahrzeuges gemessen wird, wobei Meßgrößen, wie Radlast, Achslast, Gesamtgewicht, Radlast- und Achslastverteilung, berechnet werden, **dadurch gekennzeichnet, daß** hieraus der Beladungszustand des Kraftfahrzeuges ermittelt wird, der in die Fahrwerkvermessung mit einbezogen wird.

2. Verfahren nach Anspruch 1, **dadurch gekennzeichnet, daß** die Auswertung der Meßergebnisse mit Hilfe von Radlasttabellen erfolgt.

3. Verfahren nach Anspruch 1 oder 2, **dadurch gekennzeichnet, daß** die Auswertung der Meßergebnisse in einem Rechner der Fahrwerkvermessungseinrichtung durchgeführt wird.

4. Verfahren nach einem der Ansprüche 1 bis 3, **dadurch gekennzeichnet, daß** der Beladungszustand der Kraftfahrzeuges mit Herstellerangaben verglichen und ggfs. eine Fehlermeldung gegeben wird.

5. Verfahren nach einem der Ansprüche 1 bis 4, **dadurch gekennzeichnet, daß** aus dem Beladungszustand über Kennlinientabellen eine Korrekturrechnung der Radstellungsdaten durchgeführt wird.

6. Fahrwerkvermessungseinrichtung mit Meßköpfen zur Bestimmung der Radstellungen der Räder eines Kraftfahrzeuges auf einem Meßplatz, wobei aus den Radstellungen der Räder durch einen Rechner der Fahrwerkvermessungseinrichtung die fahrwerkspezifischen Daten, wie geometrische Fahrachse, Sturz, Spur und Radversatz, bestimmt werden, und mit einer mit der Fahrwerkmeßeinrichtung gekoppelten Wiegeeinrichtung zur Messung der Radaufstandskräfte des Fahrzeugs, wobei der Rechner der Fahrwerkvermessungseinrichtung so ausgerüstet ist, daß er im Rahmen der Fahrwerkvermessung Meßgrößen, wie Radlast, Achslast, Gesamtgewicht, Radlast- und Achslastverteilung, berechnet, **dadurch gekennzeichnet, daß** der Rechner daraus den Beladungszustand des Kraftfahrzeuges ermittelt, der in die Fahrwerkvermessung mit einbezogen wird.

7. Einrichtung nach Anspruch 6, wobei die Fahrwerkvermessungseinrichtung Schiebe (22, 24)-und/oder Drehplatten (18, 20) aufweist, auf denen das Fahrzeug während der Fahrzeugvermessung steht, **dadurch gekennzeichnet, daß** die Wiegeeinrichtung Wiegeeinheiten umfaßt, die in den Dreh- (18, 20) oder Schiebeplatten (22, 24) der Fahrwerkvermessungseinrichtung angeordnet sind.

8. Einrichtung nach einem der Ansprüche 6 oder 7, **dadurch gekennzeichnet, daß** die Wiegeeinrichtung mit der Fahrwerkvermessungseinrichtung durch Kabel, Infcarotkopplung oder Funk gekoppelt ist.

9. Einrichtung nach Anspruch 7, **dadurch gekennzeichnet, daß** eine Wiegeeinheit aus mindestens drei Sensoren (50, 52, 54, 56) besteht, die an den Dreh- (18, 20) oder Schiebeplatten (22, 24) der Fahrwerkvermessungseinrichtung angeordnet sind.

10. Einrichtung nach Anspruch 9, **dadurch gekennzeichnet, daß** eine Wiegeeinheit aus vier Sensoren (50, 52, 54, 56) besteht, die an den Ecken der Dreh- (18, 20) oder Schiebeplatten (22, 24) der Fahrwerkvermessungseinrichtung angeordnet sind.

11. Einrichtung nach einem der Ansprüche 9 oder 10, **dadurch gekennzeichnet, daß** die Sensoren (50, 52, 54, 56) derart angeordnet sind, daß die Kraftquerkraft frei in die Sensoren eingeleitet wird.

12. Einrichtung nach einem der Ansprüche 9 oder 10, **dadurch gekennzeichnet, daß** die Sensoren an Gelenktellern befestigt sind, über die die Kraft auf die Sensoren (50, 52, 54, 56) eingeleitet wird.

13. Einrichtung nach einem der Ansprüche 6 bis 12, **dadurch gekennzeichnet, daß** die Ausgangssignale einer Wiegeeinheit einem Mikroprozessor zugeführt werden, der die Meßwerte verarbeitet und zum Abruf durch den zentralen Rechner der Fahrwerkvermessungseinrichtung bereitstellt.

## Claims

1. Method for chassis measurement, comprising a chassis measurement device having measuring heads for determining the wheel positions of the wheels of a motor vehicle on a measuring site, wherein from the wheel positions of the wheels the chassis-specific data such as geometric driving axle, camber, toe and wheel offset are determined by the chassis measurement device, wherein the wheel vertical force of the vehicle wheels is measured in the scope of the chassis measurement, wherein measurement variables, such as wheel load, axle load, overall weight, wheel load and axle load distribution are calculated,
**characterized in that** the load condition of the motor vehicle, which is also considered in the chassis measurement, is determined therefrom.

2. Method according to claim 1,
**characterized in that** the evaluation of the measurement results is effected with the aid of wheel load tables.

3. Method according to claim 1 or 2,
**characterized in that** the evaluation of the measurement results is carried out in a computer of the chassis measurement device.

4. Method according to any of claims 1 to 3,
**characterized in that** the load condition of the motor vehicle is compared to manufacturer's data and an error report is made, if applicable.

5. Method according to any of claims 1 to 4,
**characterized in that** from the load condition a correction calculation of the wheel position is carried out using tables of characteristic curves.

6. Chassis measurement device with measuring heads for determining the wheel positions of the wheels of a motor vehicle on a measuring site, wherein from the wheel positions of the wheels by means of a computer of the chassis measurement device the chassis-specific data such as geometric driving axle, camber, toe and wheel offset are determined, and comprising a weighing means coupled with the chassis measurement device for measuring the wheel vertical forces of the vehicle, wherein the computer of the chassis measurement device is configured to calculate, in the scope of the chassis measurement, measurement variables, such as wheel load, axle load, overall weight, wheel load and axle load distribution,
**characterized in that** the computer determines the load condition of the motor vehicle therefrom which is considered in the chassis measurement.

7. Device according to claim 6, with the chassis measurement device having sliding (22, 24) and/or rotating plates (18, 20) on which the vehicle stands during the chassis measurement,
**characterized in that** the weighing means comprises weighing units arranged in the rotating (18, 20) or sliding plates (22, 24) of the chassis measurement device.

8. Device according to any of claims 6 or 7,
**characterized in that** the weighing means is coupled with the chassis measurement device by cable, infrared coupling or radio communication.

9. Device according to claim 7,
**characterized in that** a weighing unit consists of at least three sensors (50, 52, 54, 56) arranged on the rotating (18, 20) or sliding plates (22, 24) of the chassis measurement device.

10. Device according to claim 9,
**characterized in that** a weighing unit consists of four sensors (50, 52, 54, 56) arranged at the corners of the rotating (18, 20) or sliding plates (22, 24) of the chassis measurement device.

11. Device according to any of claims 9 or 10,
**characterized in that** the sensors (50, 52, 54, 56) are arranged such that the lateral force is introduced freely into the sensors.

12. Device according to any of claims 9 or 10,
**characterized in that** the sensors are mounted on hinged tables via which the force is introduced onto the sensors (50, 52, 54, 56).

13. Device according to any of claims 6 to 12,
**characterized in that** the output signals of a weighing unit are supplied to a microprocessor processing the measurement values and making them available for access by the central computer of the chassis measurement device.

## Revendications

1. Procédé pour la mesure d'un châssis avec un dispositif de mesure de châssis comportant des têtes de mesure pour déterminer les positions des roues d'un véhicule automobile sur un emplacement de mesure, dans lequel les données spécifiques du véhicule, telles que l'axe géométrique de déplacement, le carrossage, la voie et le déport de roue, sont déterminées à partir des positions des roues par le dispositif de mesure de châssis, dans lequel la force d'appui des roues du véhicule est mesurée dans le cadre de la mesure de châssis, et dans lequel des grandeurs de mesure telles que la charge sur les roues, la charge d'essieu, le poids total, la distribution de la charge sur les roues et la charge d'essieu sont calculés, **caractérisé en ce qu'**à partir de ceci on détermine l'état de charge du véhicule automobile qui est inclus dans la mesure de châssis.

2. Procédé selon la revendication 1, **caractérisé en ce que** l'interprétation des résultats de la mesure s'effectue à l'aide de tableaux de charge sur les roues.

3. Procédé selon l'une quelconque des revendications 1 ou 2, **caractérisé en ce que** l'interprétation des résultats de la mesure est exécutée dans un ordinateur du dispositif de mesure de châssis.

4. Procédé selon l'une quelconque des revendications 1 à 3, **caractérisé en ce que** l'état de charge du véhicule automobile est comparé à des indications du fabricant et le cas échéant une signalisation de défaut est délivrée.

5. Procédé selon l'une quelconque des revendications 1 à 4, **caractérisé en ce qu'**il est procédé à un calcul de correction des données de position des roues à partir de l'état de charge, par l'intermédiaire de tableaux de courbes caractéristiques.

6. Dispositif de mesure de châssis comportant des têtes de mesure pour déterminer les positions des roues d'un véhicule automobile en un emplacement de mesure, dans lequel les données spécifiques du véhicule, telles que l'axe géométrique de déplacement, le carrossage, la voie et le déport de roue sont déterminées à partir des positions des roues par un ordinateur du dispositif de mesure de châssis, et comportant un dispositif de pesée couplé au dispositif de mesure de châssis, pour la mesure des forces d'appui des roues du véhicule, l'ordinateur du dispositif de mesure de châssis étant équipé de manière à calculer, dans le cadre de la mesure de châssis, des grandeurs de mesure telles que la charge sur les roues, la charge d'essieu, le poids total, la distribution de la charge sur les roues et de la charge d'essieu, **caractérisé en ce que** l'ordinateur détermine à partir de ceci l'état de charge du véhicule automobile, qui est inclus dans la mesure du châssis.

7. Dispositif selon la revendication 6, dans lequel le dispositif de mesure de châssis comporte des plaques coulissantes (22, 24) et/ou des plaques tournantes (18, 20) sur lesquelles se tient le véhicule pendant la mesure du châssis, **caractérisé en ce que** le dispositif de pesée comprend des unités de pesée qui sont disposées dans les plaques tournantes (18, 20) ou plaques coulissantes (22, 24) du dispositif de mesure de châssis.

8. Dispositif selon l'une quelconque des revendications 6 ou 7, **caractérisé en ce que** le dispositif de pesée est couplé au dispositif de mesure de châssis par des câbles, un couplage infrarouge ou par radio.

9. Dispositif selon la revendication 7, **caractérisé en ce qu'**une unité de pesée est constituée d'au moins trois capteurs (50, 52, 54, 56) qui sont disposés sur les plaques tournantes (18, 20) ou plaques coulissantes (22, 24) du dispositif de mesure de châssis.

10. Dispositif selon la revendication 9, **caractérisé en ce qu'**une unité de pesée est constituée de quatre capteurs (50, 52, 54, 56) qui sont disposés aux angles des plaques tournantes (18, 20) ou plaques coulissantes (22, 24) du dispositif de mesure de châssis.

11. Dispositif selon l'une quelconque des revendications 9 ou 10, **caractérisé en ce que** les capteurs (50, 52, 54, 56) sont disposés de manière que la force transversale soit introduite librement dans les capteurs.

12. Dispositif selon l'une quelconque des revendications 9 ou 10, **caractérisé en ce que** les capteurs sont fixés sur des plateaux articulés par lesquels la force est introduite sur les capteurs (50, 52, 54, 56).

13. Dispositif selon l'une quelconque des revendications 6 à 12, **caractérisé en ce que** les signaux de sortie d'une unité de pesée sont envoyés à un microprocesseur qui traite les valeurs de mesure et les prépare pour être appelées par l'ordinateur central du dispositif de mesure de châssis.
